# EUROPÄISCHE PATENTSCHRIFT

(11) **EP 1 289 880 B1**
(45) Veröffentlichungstag und Bekanntmachung des Hinweises auf die Patenterteilung: **26.11.2008**
(21) Anmeldenummer: 01943133.7
(22) Anmeldetag: 19.05.2001
(51) Int. Cl.: C01B 13/32, C01B 13/36, C01B 33/24, C01F 7/34, C01F 7/44, C01F 11/18, C01G 9/02, C01G 49/02, B01J 19/00, B28B 11/06, C09D 1/10, C04B 41/50

(54) **VERFAHREN ZUR HERSTELLUNG VON FEINKRISTALLINEN FESTSTOFFEN UND/ODER ZUR ABSCHEIDUNG VON SCHICHTEN SCHWERLÖSLICHER VERBINDUNGEN**
METHOD FOR PRODUCING FINE-GRAINED SOLIDS AND/OR FOR DEPOSITING LAYERS OF POORLY SOLUBLE COMPOUNDS
PROCEDE PERMETTANT LA PREPARATION DE SUBSTANCES SOLIDES FINEMENT CRISTALLINES ET/OU LE DEPOT DE COUCHES DE COMPOSES A SOLUBILITE REDUITE

(30) Priorität: 02.06.2000 DE 10027623
(43) Veröffentlichungstag der Anmeldung: 12.03.2003
(73) Patentinhaber: Ziegenbalg, Gerald, 09599 Freiberg (DE)
(72) Erfinder: Ziegenbalg, Gerald, 09599 Freiberg (DE)
(74) Vertreter: Carlsohn, Alexander
(86) Internationale Anmeldenummer: PCT/DE2001/001944
(87) Internationale Veröffentlichungsnummer: WO 2001/092148

(56) Entgegenhaltungen:
- EP-A- 0 197 327
- VAN DER GIJP S ET AL: "Preparation of BaTiO3 by homogeneous precipitation" JOURNAL OF THE EUROPEAN CERAMIC SOCIETY, ELSEVIER SCIENCE PUBLISHERS, BARKING, ESSEX, GB, Bd. 19, Nr. 9, Juli 1999 (1999-07), Seiten 1683-1690, XP004165935 ISSN: 0955-2219

## Beschreibung

Die Erfindung bezieht sich auf das Gebiet der technischen Chemie und betrifft somit ein Verfahren zur Herstellung von feinkristallinen Feststoffen und/oder zur Abscheidung von Schichten schwerlöslicher Verbindungen aus der flüssigen Phase heraus.

Metallhydroxide, Carbonate, Oxidhydroxide und Silikate finden vielfältige Anwendungen. So sind sie z.B. als Füllstoffe, Pigmente, Katalysatoren oder Katalysatorträger von großer Bedeutung. Hydroxide, Carbonate und Oxidhydroxide sind gleichzeitig der Ausgangsstoff für die Herstellung der unterschiedlichsten Oxide. In sehr vielen Anwendungsgebieten ist das Vorliegen von definiert zusammengesetzten, einen einheitlichen Phasenbestand und eine definierte Korngrößenverteilung aufweisenden Produkten eine Voraussetzung für deren erfolgreichen Einsatz, so daß vielfältige Herstellungsprozesse entwickelt wurden.

Die Herstellung von Metallhydroxiden und Oxidhydroxiden beruht auf Fällprozessen. Laugen wie NaOH oder KOH werden mit sauren oder neutralen Metallsalzlösungen vermischt. Es kommt zu einer schnellen, oftmals quantitativen Metallhydroxidbildung. Eine weite Anwendung findet auch Ca(OH)₂, das in Form von Kalkmilch die billigste Base darstellt. Ein Spezialfall ist die Fällung aus alkalischen Lösungen, in denen die Metalle in Form von Hydroxokomplexen vorliegen. Die Hydroxid- oder Oxidhydroxidbildung wird durch die Zugabe von Säuren oder von Lösungen mit einem sauren Charakter, d.h. durch eine Verschiebung des pH-Wertes in den neutralen oder schwach sauren Bereich, erzielt. Die Ausnutzung der Temperaturabhängigkeit der Löslichkeit ist eine weitere Möglichkeit zur Oxid- bzw. Oxidhydroxidsynthese aus alkalischen Metallsalzlösungen.

Carbonate können durch ein Vermischen von Metallsalzlösungen mit Alkalicarbonatlösungen oder durch die Umsetzung von Metallhydroxidlösungen oder -suspensionen mit CO₂ hergestellt werden. Die Synthese von Calciumsilikaten erfolgt in den meisten Fällen durch thermische Prozesse, die die Umsetzung von CaO mit SiO₂ beinhalten. Fällungsprozesse sind von untergeordneter Bedeutung. Möglich ist die Herstellung von amorphen Calciumsilikaten durch die Umsetzung von CaCl₂-Lösungen mit Natrium- oder Kaliumwasserglaslösungen. Es entstehen oftmals gelartige, nur schwer von der Lösung abtrennbare Fällprodukte.

Die Zusammensetzung und die physikalisch-chemischen Eigenschaften der bei einer Fällung gebildeten Feststoffe werden durch die Fällbedingungen wie Temperatur, Druck, Anfangsübersättigung, Verweilzeit und Verweilzeitverteilung, aber auch durch Rührerdrehzahl und Rührerform bestimmt. Wesentlich sind ebenfalls Reife- oder Wachstumsperioden sowie zugesetzte Impfkristalle. Generell ist eine exakte Kontrolle und die Einhaltung definierter pH-Werte einerseits wichtig, andererseits schwierig realisierbar. Einen großen Einfluß üben auch die Art der Vermischung und die Fälldauer aus.

Der eigentliche Fällprozeß kann auf unterschiedliche Weise realisiert werden. Diskontinuierliche Prozesse basieren oftmals auf einer Vorlage-Zugabe-Technik. Ein Reaktand, z. B. die Metallsalzlösung, wird vorgelegt und es erfolgt eine zeitlich gesteuerte Zudosierung des Fällmittels, z.B. einer Lauge oder einer Alkalicarbonatlösung. Durch die Wahl der vorgelegten Komponente sowie durch die Vermischung, die Zeitdauer der Zudosierung sowie die Temperatur werden wesentliche Eigenschaften des Fällproduktes bestimmt.

Eine zweite Arbeitstechnik beruht auf einer simultanen Zudosierung von beiden Reaktanden in ein entsprechendes Reaktionsgefäß, z.B. einen Rührkessel. Eine derartige Vorgehensweise kann sowohl diskontinuierlich als auch kontinuierlich durchgeführt werden.

Beide Arbeitstechniken sind dadurch charakterisiert, daß die zur Fällung gelangenden Komponenten durch eine mechanische Vermischung miteinander in Kontakt gebracht werden. Insbesondere bei spontan ablaufenden Fällungsvorgängen ist es sehr schwierig, eine den gesamten Reaktionsraum umfassende homogene Verteilung aller Reaktanden zu erreichen. An der Vermischungsstelle der Lösungen kommt es zur Ausbildung einer sehr hohen Übersättigung. Es resultiert eine spontane Fällung. Bei einer weiteren Zudosierung des Fällungsmittels erfolgt sowohl ein Wachstum bereits gebildeter Kristallkeime als auch deren Neuentstehung. Eine verbesserte Vermischung der Reaktanden wird erzielt, wenn beide Komponenten gleichzeitig in den Fällreaktor eingebracht werden. Im Idealfall sollte während des Fällprozesses an allen Stellen des Reaktors das gleiche Konzentrationsniveau vorliegen, was bei den bekannten Vorgehensweisen, wenn überhaupt, nur durch eine intensive mechanische Vermischung erreichbar ist, die ihrerseits zu hohem prozeßtechnischen und Regel- und Steueraufwand führt.

Ein Hauptproblem bei der Herstellung von feindispersen Feststoffen durch Fällprozesse ist der Erhalt eines filtrierfähigen Produktes. Oftmals werden amorphe, nur schwer filtierbare Schlämme gebildet. Dies ist das Resultat von sehr schnell ablaufenden Fällungsreaktionen. Sowohl bei der Hydroxidsynthese durch Umsetzung von Metallsalzlösungen mit Laugen als auch bei der Herstellung von Carbonaten kommt es bei einem Kontakt der Komponenten zu spontanen Fällungsprozessen. Zur Herstellung filtrierfähiger Produkte mit definierter Korngröße ist eine langsame, sorgfältige Dosierung des Fällmittels über einen längeren Zeitraum erforderlich, wodurch Effektivitätsprobleme entstehen können.

Nachfolgend soll der Stand der Technik anhand ausgewählter technischer Lösungen zur Herstellung von Hydroxiden, Carbonaten und Silikaten zusammengefaßt beschrieben werden.

Unter den in großem Maßstab hergestellten Hydroxiden nimmt Al(OH)₃ eine zentrale Stellung ein. Die Kristallisation oder Fällung von Aluminiumhydroxid ist der Gegenstand einer Vielzahl von Patentschriften. Das klassische Verfahren der Al(OH)₃-Herstellung ist das unter langsamer Abkühlung erfolgende Ausrühren von Natriumaluminatlaugen, wie es beispielsweise in K. Bielfeldt, G.Winklhaus Aluminiumverbindungen in Winnacker, Küchler Chemische Technologie, Bd. 3 Anorganische Technologie II 4. Auflage Carl Hanser Verlag München, Wien S. 1 - 41 zusammengefaßt ist.

Na⁺ + [Al(OH)4]⁻ → Na⁺ + OH⁻ + Al(OH)3↓ (1)

Die Effektivität des Ausrührprozesses wird in entscheidendem Maße von den Eigenschaften des eingesetzten Impfkristallisates (u.a. Oberfläche und Oberflächenaktivität, Phasenbestand) und dessen Menge, hierzu DD 268 461, der während des Ausrührens erfolgenden Temperaturerniedrigung, dem Na₂O/Al₂O₃-Verhältnis der Aluminatlauge sowie durch die Rührbedingungen bestimmt. Es entsteht Al(OH)₃ in der Form von Hydrargillit. Die Herstellung von definiert zusammengesetzten, filtrierfähigen Feststoffen in einer vorgegebenen Morphologie und Korngröße erfordert ein hohes Maß an Erfahrungen und ist oftmals schwierig.

Sämtliche anderen Verfahren zur Herstellung von Al(OH)₃ sind mengenmäßig nur von untergeordnetem Interesse. Sie haben jedoch eine große Bedeutung für die Herstellung von Aluminiumhydroxiden mit speziellen Eigenschaften bzw. für spezielle Einsatzgebiete. Dabei sind insbesondere die Al(OH)₃-Modifikation Bayerit sowie das Oxidhydroxid (AlOOH) Böhmit von Bedeutung. Sowohl Bayerit als auch Böhmit sind der Ausgangsstoff für die Herstellung von speziellen Aluminiumoxidmodifikationen, die auf Grund einer ausgeprägten Porenstruktur z. B. als Katalysatorträger eine breite Anwendung finden.

Bayerit kann durch ein Einleiten von CO₂ in alkalische Aluminatlaugen hergestellt werden. Eine weitere Möglichkeit ist die Zersetzung von Aluminiumalkoholaten sowie die Neutralisation von Aluminatlaugen. Letzterer Prozeß kann auf zwei unterschiedlichen Wegen realisiert werden nämlich durch:
- die Neutralisation von alkalischen Aluminatlaugen mit Säuren oder
- die Neutralisation von Aluminatlaugen mit Lösungen von sauren Aluminiumsalzen wie AlCl₃ oder Al₂(SO₄)₃.
Insbesondere die für die Herstellung von Katalysatoren interessante Al(OH)₃-Modifikation Bayerit ist nur schwer in hoher Phasenreinheit erhältlich. Bekannt ist, Bayerit durch eine Fällung aus Natriumaluminatlaugen bei einem pH-Wert von 9 bis 10 herzustellen, siehe hierzu Karl Wefers, Chanakya Misra Oxides and Hydroxides of Aluminium Alcoa Technical Paper No. 19, Revised Alcoa Laboratories 1987. Auch die Zersetzung eines Aluminiumamalgams führt zur Bildung von Bayerit, a.a.O. Das Aluminiumoxidhydroxid Böhmit wird z.B. gem. DE 198 36 821 durch eine kontrollierte Hydrolyse von Aluminiumalkoxiden und eine anschließende thermische Behandlung unter hydrothermalen Bedingungen synthtisiert.

Unter den technisch hergestellten Carbonaten nimmt CaCO₃ eine zentrale Stellung ein. Es findet vor allem als Füllstoff eine breite Anwendung. Die bekannten Verfahren zur Herstellung von gefälltem CaCO₃ beruhen auf der Umsetzung von Kalkmilch mit CO₂ sowie auf Fällprozessen bei einem Vermischen leicht löslicher Calciumsalze, vor allem CaCl₂, mit carbonathaltigen Lösungen. Ein Verfahren zur Herstellung von feinteiligem CaCO₃ großer Reinheit wird in DE 35 10 695 beschrieben. Ca(OH)₂ wird unter Zusatz eines Ammonium- oder Aminsalze gelöst. Durch ein Einleiten von CO₂ wird CaCO₃ gebildet. EP 0 522 415 beschreibt ein Verfahren zur Herstellung von CaCO₃ durch Umsetzung von Ca(OH)₂ mit CO₂ in Ethylenglykol.

Die Fällung von CaCO₃ aus calciumionenhaltigen Lösungen mit wässrigen carbonathaltigen Lösungen unter schwach basischen Bedingungen bei 20° bis 50° C ist Gegenstand von EP 499 666 A1.

Sämtliche auf der Vermischung von zwei spontan miteinander reagierenden Komponenten beruhende Prozesse gestatten keine örtliche und/oder zeitliche Trennung zwischen der Herstellung der Lösung und dem Beginn der Ausfällung. Die Abscheidung des Kristallisates beginnt mit der Vermischung der Komponenten. Die Herstellung von Lösungen, aus denen nach einer einstellbaren Zeit eine Hydroxid- oder Carbonat- oder Silikatbildung stattfindet, ist nicht möglich. So ist es z.B. unmöglich, CaCl₂- und Na₂CO₃-Lösungen so zu vermischen, daß klare, hohe CaCO₃-Gehalte aufweisende Lösungen entstehen und diese erst in einem zweiten Schritt, an einem anderen Ort, zur Ausfällung zu bringen. Die Möglichkeit einer derartigen Vorgehensweise wäre insbesondere für die Realisierung von Kristallisationen an Orten interessant, an denen eine Vermischung von zwei Lösungen nicht möglich ist, z.B. in einem porösen Gestein oder im Inneren eines Bauteiles. Analoges gilt für Prozesse der Schichtabscheidung. Diese sind insbesondere zur Herstellung von Überzügen, Schutzschichten aber auch zur Herstellung von katalytisch aktiven Oberflächen von Interesse. Vorteilhafte Bedingungen für eine Schichtabscheidung sind immer dann gegeben, wenn die Fällung aus Lösungen mit einer geringen Übersättigung erfolgt. Gleichzeitig darf nur ein langsamer Abbau der Übersättigung erfolgen. Feststoffe deren Löslichkeit mit der Temperatur zunimmt, werden dadurch abgeschieden, daß heiße Lösungen langsam abgekühlt werden. Analog ist es möglich, Feststoffe durch eine Temperaturerhöhung auszufällen, wenn deren Löslichkeit mit zunehmender Temperatur abnimmt. Insbesondere bei Verbindungen mit einer extrem niedrigen Löslichkeit wie diese z.B. bei sehr vielen Hydroxiden oder

Carbonaten angetroffen, wird, ist eine derartige Vorgehensweise jedoch nicht praktikabel.

Van der Gijp et al. beschreiben in "Preparation of BaTiO3 by Homogeneous Precipitation" J. Europ. Cer. Soc. 19 (1999). 1683-1690, die Ausfällung von BaTiO₃ aus einer Lösung, die ein Bariumalkoholat und ein Titanalkoholat enthält, durch die Zugabe von Essigsäure. Die Fällung beginnt nach dem Erhitzen der Lösung.

Von diesen Mängeln des Standes der Technik und deren Ursachen ausgehend, liegt der Erfindung die Aufgabe zu Grunde, ein einfaches und kostengünstiges Verfahren zur Herstellung von feinkristallinen Feststoffen und/oder von Schichten schwerlöslicher Verbindungen zu entwickeln, in welchem die Feststoffbildung an eine zeitlich steuerbare chemische Reaktion gekoppelt ist, wobei die Ausgangsstoffe ohne Ablaufen einer spontanen Reaktion miteinander vermischt werden können und durch die Wahl der Reaktionsbedingungen die Eigenschaften der sich bildenden Feststoffe und Feststoffschichten gezielt beeinflußt werden können.

Erfindungsgemäß wird diese Aufgabe dadurch gelöst, daß Metallionen enthaltende Lösungen oder Sole oder Suspensionen im alkalischen Bereich mit einem oder mehreren Estern umgesetzt werden, wobei
- zur Herstellung von Hydroxiden und/oder Oxidhydroxiden und/oder zur Abscheidung von Schichten dieser Verbindungen Ester eingesetzt werden, bei deren Verseifung die entstehende Säure kein Fällprodukt mit den Metallionen bildet und/oder
- zur Herstellung von Carbonaten und/oder basischen Carbonaten und/oder zur Abscheidung von carbonatischen Schichten Ester der Kohlensäure eingesetzt werden und/oder
- zur Herstellung von Calciumsilicaten und/oder Magnesiumsilikaten und/oder zur Abscheidung von Calcium- und/oder Magnesiumsilikatschichten Ester der Kieselsäure verseift werden.

Es wurde überraschenderweise gefunden, daß durch eine Verseifung von Estern in alkalischen, Metallionen enthaltenden Lösungen oder Solen oder Suspensionen in idealer Weise Bedingungen geschaffen werden, die sowohl zur Ausbildung von homogenen, leicht filtrierbaren Kristallisaten führen als auch die Abscheidung von fest haftenden Schichten ermöglichen. Dies kann in vorteilhafter Weise zur Synthese von feinkristallinen Pulvern oder zur Abscheidung von Schichten von Hydroxiden, Oxidhydroxiden, Carbonaten und Calcium- und/oder Magnesiumsilikaten genutzt werden.

Die erfindungsgemäße Synthese von Hydroxiden und Oxidhydroxiden beruht darauf, daß durch die Esterverseifung den alkalischen, Metallionen enthaltenden Lösungen oder Solen Hydroxidionen entzogen werden.

Ester + OH⁻ → Alkohol + Säurerest (2)

[Me[OH)₄]⁻ → Me(OH)₃ ↓ + OH- (3)

Me = Metall

Alkalische, Metallionen enthaltende Lösungen sind oftmals durch das Vorliegen von Metallhydroxokomplexen (z.B. [Al(OH)₄]⁻) gekennzeichnet. Gleichzeitig sind "freie" oder "überschüssige" Hydroxidionen vorhanden. Der Verseifungsprozeß bewirkt nun, daß die Hydroxidionenkonzentration sinkt. Damit wird entsprechend Gleichung 3 eine Zersetzung der Metallhydroxokomplexe bewirkt, welche schließlich zur Bildung von festen Metallhydroxiden führt. Es kommt somit zu einer, aus einer homogenen Lösung erfolgenden Hydroxidbildung. In analoger Weise können negativ geladene Metallhydroxidsole unter Abscheidung feindisperser Feststoffe zersetzt werden.

Bei der Synthese von Carbonaten bzw. von basischen Carbonaten oder Calcium- bzw. Magnesiumsilikaten liefert die Esterverseifung demgegenüber das zur Fällung gelangende Anion.

Ester + OH⁻ → Alkohol + CO₃²⁻ (4)

Me²⁺ + CO₃²⁻ → MeCO₃ ↓ (5)

Ein wesentlicher Vorteil des Verfahrens liegt darin, daß die Ausgangskomponenten vor Beginn des Fällprozesses homogen vermischt werden können, ohne daß eine spontane Reaktion erfolgt. Damit werden Bedingungen geschaffen, die für die Bildung eines einheitlichen Kristallisates wesentlich sind und die durch eine Zudosierung eines Fällmittels nicht erzielt werden können. So führt eine durch einen Säurezusatz erfolgende Neutralisation von alkalischen, Metallionen enthaltenden Lösungen in vielen Fällen zur Bildung von amorphen, teilweise eine gelartige Konsistenz aufweisenden Hydroxiden, die nur schwer von der Lösung abtrennbar sind.

Erfindungsgemäß können sowohl mit Wasser beliebig mischbare als auch nur teilweise mischbare Ester eingesetzt werden. Oftmals sind für die Reaktion vorteilhafte Ester in Wasser nicht oder nur in sehr geringen Konzentrationen löslich. D.h., bei höheren Esterkonzentrationen kommt es zur Ausbildung von zwei Phasen. Durch eine intensive Vermischung kann der Ester zwar z. B. in Form von feinen Tröpfchen mit der wäßrigen Phase in Kontakt gebracht werden, jedoch ist es in vielen Fällen vorteilhafter, durch den erfindungsgemäßen Zusatz einer lösungsvermitteinden Komponente, eine homogene Lösung herzustellen. Vorteilhafte lösungsvermittelnde Komponenten sind insbesondere Alkohole, und dabei vor allem Ethanol. Die zur Ausbildung eines homogenen Dreikomponentensystems erforderlichen Konzentrationen sind den Phasendiagrammen der jeweiligen Systeme H₂O-Alkohol-Ester zu entnehmen.

Überraschend war, daß der durch die Esterverseifung induzierte Fällungsprozeß zur Bildung von Hydroxiden in einer gut filtrierbaren Form führt. So ist z.B. eine Gewinnung von Al(OH)₃-Kristallisaten ohne den Zusatz von Impfkristallen möglich. Die durch die Esterhydrolyse in einfacher Weise zu realisierende Fällung von Aluminiumhydroxid war umso überraschender da bekannt ist, daß alkalische, gelöste Metallhydroxide enthaltende Lösungen eine hohe Stabilität besitzen und eine große Neigung zur Ausbildung von Übersättigungen aufweisen. Ebenso überraschend war, daß bei einer durch eine Esterhydrolyse induzierten Hydroxidfällung Phasen gebildet werden, die bei gewöhnlichen Fällprozessen nur schwer erhältlich sind. Wird z. B. eine Natriumaluminatlösung mit Ethylacetat vermischt, so erfolgt die Bildung der Al(OH)₃-Modifikation Bayerit. Dies war um so überraschender, da Bayerit nach dem bisherigen Stand der Technik nur durch sehr aufwendige Syntheseschritte herstellbar war.

Der Verlauf der Hydroxidbildung kann durch die Zusammensetzung des Esters, die Temperatur, den Alkaliüberschuß sowie die Konzentration an Metallhydroxokomplexen zeitlich gesteuert werden. Gleichzeitig ist damit die Morphologie, der Phasenbestand sowie die Korngröße des sich bildenden Hydroxids entscheidend beeinflußbar. In Gegenwart hoher Metallionenkonzentrationen und bei Einsatz eines Überschusses an Ester erfolgt die Bildung feinkristalliner Fällprodukte. Niedrige Metallionenkonzentrationen sowie geringe Esteranteile bewirken demgegenüber die Abscheidung von Schichten. Für eine Schichtbildung vorteilhafte Bedingungen sind eine langsame Verseifung des Esters, möglichst geringe Absolutkonzentrationen an ausfällbaren Metallionen, sowie die Anwesenheit von reaktiven Oberflächen. Letztere können z.B. durch eine Vorbehandlung der zu beschichtenden Oberflächen mit Säuren oder Laugen geschaffen werden. Es können Oberflächen sowohl mit Hydroxid-, Oxidhydroxid- als auch Carbonat- oder Silikatschichten überzogen werden. Gleichzeitig ist es möglich, in Poren oder anderen Hohlräumen Hydroxid-, Oxidhydroxid- oder Carbonat- oder Silikatschichten abzuscheiden. Gegebenenfalls ist auch ein vollständiger Verschluß eines porösen Materials mit sekundär gebildeten Mineralen möglich. Dies wird dadurch erreicht, daß in die entsprechenden Hohlräume Lösungen eingebracht werden, die sämtliche zur Bildung von Hydroxiden, Oxidhydroxiden, Carbonaten oder Calciumsilikaten erforderlichen Komponenten enthalten. So ist es möglich, einen porösen Sandstein mit einer alkalischen, einen Ester enthaltenden Aluminatlösung zu tränken. Der in den Poren des Sandsteines ablaufende Prozeß der Hydroxidbildung führt zur Bildung von Aluminiumhydroxidschichten, die auf den Porenwandungen aufwachsen. Bei einem Einsatz höher konzentrierter Ausgangslösungen sowie bei einer mehrmaligen Behandlung des Gesteins ist auch eine vollständige Ausfüllung des Porenraumes mit Aluminiumhydroxidkristallisaten möglich. Eine derartige Anwendungsmöglichkeit ist insbesondere im Rahmen der Altlastensanierung von Interesse. In Böden oder porösen Gesteinen können gezielt Hydroxide abgeschieden werden. Aufgrund der bekannten Neigung von Aluminiumhydroxid während der Fällung sowohl Anionen als auch Kationen einzuschließen sowie Schadstoffe auszuflocken ist mit einem derartigen Prozeß eine Schadstoffabreicherung verbunden. Die gebildeten Hydroxide wirken gleichzeitig als eine reaktive Barriere. Bei einem Zutritt von schadstoffhaltigen Lösungen können die Schadstoffe von den Hydroxiden sowohl adsorbiert als auch gefällt werden. Die behandelten Bereiche besitzen eine hohe Pufferkapzität. Bei einem Zutritt von sauren Lösungen erfolgt deren Neutralisation. Damit kann in schadstoffhaltigen Böden oder Gesteinsformationen erstmals ein Vorgang in-situ initiiert werden, der im Rahmen der Abwasseraufbereitung zu einem der Standardprozesse gehört. Das erfindungsgemäße Verfahren gewährleistet, daß ein vollständiger Umsatz der Aluminatlauge erfolgt und in den behandelten Bereichen keine alkalisch reagierenden Rückstände verbleiben.

Eine weitere Anwendungsmöglichkeit des erfindungsgemäßen Verfahrens besteht in der Abscheidung von Aluminiumhydroxidschichten z.B. in technischen Bauteilen. So ist es möglich, Aluminiumhydroxid in Form von Bayerit oder Böhmit abzuscheiden und durch eine thermische Behandlung in reaktive Aluminiumoxidmodifikationen zu überführen. Damit ist die Möglichkeit gegeben, gezielt katalytisch aktive Schichten zu synthetisieren. Das erfindungsgemäße Verfahren eröffnet vielfältige Möglichkeiten der Synthese nicht nur von Aluminiumhydroxidschichten oder -kristallisaten sondern in gleichem Umfange auch von weiteren Hydroxiden wie z.B. von Zn(OH)₂ oder Sn(OH)₂.

Die erforderlichen alkalischen, Metallionen enthaltenden Lösungen können durch ein Auflösen von Metallhydroxiden oder von Metallen in Alkalilaugen oder durch die Zugabe einer Metallsalzlösung zu einer im Überschuß vorliegenden Lauge hergestellt werden.

Metallhydroxide können oftmals in kolloidaler Form in langzeitstabilen Solen vorliegen. Eine Koagulation wird z.B. durch den Zusatz von Elektrolyten bewirkt. Dieser Vorgang erfolgt spontan und beinhaltet keine Möglichkeiten einer zeitlichen Steuerung. Im alkalischen Bereich stabile Sole können erfindungsgemäß durch den Zusatz eines oder mehrerer Ester in einem zeitlich steuerbaren Prozeß ausgeflockt werden. So können beispielsweise negativ geladene Eisenhydroxidsole, die durch die Zudosierung einer FeCl₃-Lösung zu einem vorgelegten Gemisch aus NaOH-Wasser-Glycerin problemlos herstellbar sind, durch den Zusatz eines Esters, dessen Verseifung zu einer Verschiebung des pH-Wertes in den schwach alkalischen oder neutralen Bereich führt, in einem zeitlich steuerbaren Prozeß ausgeflockt werden. Je nach dem Charakter des eingesetzten Esters sowie der Konzentration des Eisenhydroxidsols können gelartige Eisenhydroxidschichten oder feinkristalline Eisenhydroxidschlämme abgeschieden werden. Gleichzeitig ist es möglich, reaktive Oberflächen gezielt mit Eisenhydroxidschichten zu überziehen. Es erfolgt eine Fällung aus einer homogenen Lösung und es werden sehr einheitlich zusammengesetzte Schichten abgeschieden.

In analoger Weise können z.B. Sn(OH)₂- Schichten aus [Sn(OH)₆]⁴⁻enthaltenden Lösungen oder carbonatische Überzüge durch eine Verseifung von Kohlensäureestern erzeugt werden.

Unter den technisch bedeutenden Carbonaten nimmt CaCO₃ eine zentrale Stellung ein. Es ist u.a. als Füllstoff sowohl für Kunststoffe als auch Papier von wachsendem Interesse. Um CaCO₃ durch die Verseifung eines Kohlensäureesters aus einer homogenen Lösung heraus herstellen zu können, ist es notwendig, eine alkalische, Calciumionen enthaltende Lösung zu synthetisieren.

Dies ist durch ein Auflösen von Ca(OH)₂ in Lösungen, die Kohlenhydrate wie Saccharose, Glukose oder Glukonate enthalten, möglich. Ebenso gelingt es, alkalische, Calciumionen enthaltende Lösungen durch ein Vermischen von Lösungen leicht löslicher Calciumsalze mit Alkalilaugen in Gegenwart eines Kohlenhydrats oder Amins herzustellen. Sowohl die Zucker als auch die Amine verhindern die Bildung von Ca(OH)₂, so daß Lösungen mit Ca(OH)₂-Konzentrationen oberhalb der normalen Calciumhydroxidlöslichkeit resultieren. Erfindungsgemäß werden diesen Lösungen Kohlensäureester zugesetzt, deren Verseifung zur Bildung von Carbonationen und damit zur CaCO₃-Kristallisation führt. Die Morphologie, der Phasenbestand sowie die physikalisch-chemischen Eigenschaften können durch die Lösungszusammensetzung, den pH-Wert, die Zusammensetzung des Esters sowie die Temperatur der Fällung gesteuert werden. In vorteilhafter Weise kann die CaCO₃-Fällung in Gegenwart eines Puffersystems bei konstantem pH-Wert durchgeführt werden. Vorzugsweise werden dabei alkalische Glykokoll-Puffer eingesetzt. In analoger Weise ist die Herstellung von Lösungen, aus denen es zur Abscheidung von amorphen Calciumsilikaten kommt, möglich. Überraschend war, daß die Verseifung der Kieselsäureester und insbesondere von Tetraethoxysilan nicht zur Bildung von amorphen Fällungskieselsäuren führt, sondern - wie der während der Umsetzung sinkende Ca²⁺ Gehalt der Lösungen verdeutlicht - amorphe Calciumsilikate gebildet werden. Die Zusammensetzung der Fällungsprodukte ist abhängig vom Ca²⁺/Si⁴⁺-Ausgangsverhältnis, der Temperatur sowie dem pH-Wert der Lösung.

An nachfolgenden, ausgewählten Ausführungsbeispielen soll die Erfindung näher erläutert werden, wobei sich auch dem Fachmann zeigt, daß es möglich ist, zunächst die betreffenden Lösungen zu vermischen und diese ggf. anschließend an einem anderen Ort, an dem eine Vermischung unmöglich ist, zur Ausfällung zu bringen.

### Beispiel 1

Zur Herstellung von Bayeritwird wie folgt vorgegangen:

1,5 I einer Natriumaluminatlauge mit einem Na₂O/Al₂O₃ -Verhältnis von 1,65 und einem Al₂O₃-Gehalt von 19 Masse-% (Dichte =1,48 g/cm³) werden unter Rühren zu 8,5 I Wasser gegeben. Es resultiert eines Lösung mit einem pH-Wert von 12,5 und einer Al³⁺-Konzentration von 22,32 g/l. Nach der vollständigen Vermischung von Natriumaluminatlauge und Wasser erfolgt der unter kontinuierlichem Rühren erfolgende Zusatz des die Bayerit-Bildung bewirkenden Essigsäureethylesters. Zur Reduzierung des während der Verseifung erfolgenden Temperaturanstieges des Reaktionsgemisches erfolgt die Zugabe des Esters in zwei Schritten. Im ersten Schritt werden 0,65 I zugesetzt. Es entsteht eine klare Lösung, die sich nach geraumer Zeit leicht eintrübt. Der pH-Wert fällt kontinuierlich und verdeutlicht das Ablaufen der Verseifung. Das Gemisch wird kontinuierlich gerührt, wobei die sich verstärkende Eintrübung die Bildung von Al(OH)₃ anzeigt. Nach 2 Stunden erfolgt der Zusatz von weiteren 0,7 I Essigsäureethylester. Der Rührvorgang wird über einen Zeitraum von 12 h fortgesetzt. Es entstehen ca. 650 g Al(OH)₃, welche durch Filtration in einfacher Form von der Lösung abgetrennt werden können. Durch ein mehrmalige Waschen mit Wasser wird ein Produkt mit einem Na⁺-Gehalt unter 0,05 Masse-% erhalten. Nach Trocknung bei 110 °C liegt Al(OH)₃ als phasenreiner Bayerit vor.

### Beispiel 2

Zur Herstellung eines feinkristallinen Zinkhydroxids wird wie folgt vorgegangen:

10 I einer 2 molaren NaOH werden unter Rühren mit 2 I einer 1 molaren ZnCl₂-Lösung gegeben. Es entsteht eine klare, Zn(OH)₄⁻-lonen enthaltende Lösung mit einem pH-Wert von 13,3. Dieser werden, ebenfalls unter Rühren, 0,5 I Ethylacetat zugesetzt. Die einsetzende Bildung von Zinkhydroxid zeigt sich in der nach geraumer Zeit beginnenden Eintrübung der Lösung. Nach 4 Stunden erfolgt ein nochmaliger Zusatz von 0,5 I Ethylacetat. Der Zn-Gehalt der Lösung fällt innerhalb von 24 Stunden von 11,20 auf 0,2 g/l. Der gebildete Feststoff kann in einfacher Form durch Filtration von der Lösung abgetrennt werden.

### Beispiel 3

Zur Herstellung einer zur Bildung von CaCO₃ führenden Lösung wird wie folgt vorgegangen:

2 I einer 0,1 molaren CaCl₂-Lösung werden unter Rühren mit 60 ml einer Lösung von 150 g/l Saccharose und 400 ml einer 1 molaren NaOH versetzt. Es resultiert eine klare Lösung mit einem pH-Wert von 12,5. Zu dieser Lösung werden unter intensivem Rühren 100 ml Propylencarbonat zugesetzt. Es entsteht wiederum eine klare Lösung. Innerhalb von 48 Stunden erfolgt die Abscheidung von 20 g CaCO₃.

### Beispiel 4

Zur homogenen Beschichtung eines Bauteiles mit einem CaCO₃-Überzug wird eine Lösung hergestellt, die 7,5 g/l Glykokoll enthält. Zu 2 I dieser Lösung werden nacheinander, unter konstantem Rühren zugesetzt:
- 400 ml 0,2 molare NaOH
- 100 ml 1 molare MgCl₂
- 100 ml 1 molare CaCl₂
- 30 ml Propylencarbonat.

Die resultierende klare Lösung weist eine Ca²⁺-Konzentration von 1,48 g/l und einen pH-Wert von 9,39 auf. Innerhalb von 48 Stunden sinkt der pH-Wert auf 7,01 und der Ca²⁺-Gehalt auf 1,03 g/l.

Es wird eine homogene Beschichtung des Bauteiles mit Calcit erzielt.

### Beispiel 5

Zur Herstellung einer, in einer natürlichen, porösen Sandsteinformation befindlichen reaktiven Barriere aus Fe(OH)₃ wird ein Eisenhydroxidsol wie folgt hergestellt:

Zu 200 I einer 1 molaren NaOH werden 80 I Glycerin zugesetzt. Unter kontinuierlichem Rühren erfolgt der Zusatz von 1700 I Wasser und anschließend von 600 I einer 0,1 molaren FeCl₃-Lösung. Es entsteht ein braunrot gefärbtes, sehr stabiles Eisenhydroxidsol. Diesem werden 20 I Essigsäureethylester zugesetzt. In die zu behandelnde Sandsteinformation wird das Sol durch einen Injektionsprozeß eingebracht. Dazu werden unterschiedliche Bohrungen erstellt über die die Lösungen in die zu behandelnden Bereiche injiziert werden. Durch den Zusatz des Essigsäuereethylesters ist die Beständigkeit des Sols auf einen Zeitraum von 5 Stunden beschränkt. Innerhalb dieser Zeit muß das Sol in die zu behandelnden Bereiche eingebracht sein. Die ablaufende Eisenhydroxidbildung führt zu einem Verschluß von Fließwegen und damit zu einer deutlichen Permeabilitätsreduzierung. Bei einem Zufließen von kontaminierten Lösungen werden insbesonder Schwermetalle durch die Eisenhydroxidpartikel adsorbiert und es erfolgt eine in-situ Reinigung kontaminierter Grundwässer.

### Beispiel 6:

Zur Synthese eines amorphen Calciumsilikates werden 20 I einer 0,1 molaren CaCl₂-Lösung mit 0,6 I einer Saccharoselösung von 100 g/l versetzt. Anschließend erfolgt die unter kontinuierlichem Rühren erfolgende Zugabe von 4 I einer 1 molaren NaOH. Es resultiert eine klare Lösung mit einem pH-Wert von 12,7, der unter Rühren 0,75 I Tetraethoxysilan zu gesetzt werden. Innerhalb von 30 Minuten fällt der pH-Wert der Lösung auf 10,3 und es erfolgt eine starke Eintrübung. Nach 24 h weist die Lösung nur noch einen Ca²⁺-Gehalt von 0,24 g/l auf, der abgeschiedene Feststoff kann durch Filtration in einfacher Weise von der Lösung abgetrennt werden. Dieser weist einen Si-Gehalt von 24,66 Masse-% und einen Ca²⁺-Gehalt von 25,85 Masse-% auf.

## Patentansprüche

1. Verfahren zur Herstellung von feinkristallinen Feststoffen und/oder zur Abscheidung von Schichten schwerlöslicher Verbindungen aus der flüssigen Phase heraus,
**dadurch gekennzeichnet, daß** Metallionen enthaltende Lösungen oder Suspensionen oder Sole im alkalischen Bereich mit einem oder mehreren Estern umgesetzt werden.

2. Verfahren nach Anspruch 1
**dadurch gekennzeichnet, daß**
zur Herstellung von Hydroxiden und/oder Oxidhydroxiden und/oder zur Abscheidung von Schichten dieser Verbindungen Ester eingesetzt werden, bei deren Verseifung die entstehende Säure kein Fällprodukt mit den Metallionen bildet,
zur Herstellung von Carbonaten und/oder basischen Carbonaten und/oder zur Abscheidung von carbonatischen Schichten Ester der Kohlensäure eingesetzt werden,
zur Herstellung von Calcium- und/oder Magnesiumsilikaten und/oder zur Abscheidung von Schichten dieser Verbindungen Ester der Kieselsäure verseift werden.

3. Verfahren nach Anspruch 1 und 2,
**dadurch gekennzeichnet, daß** die zur Synthese von feinkristallinen Hydroxiden und/oder Oxidhydroxiden und/oder von basischen Carbonaten und/oder zur Abscheidung von Schichten dieser Verbindungen eingesetzten alkalischen Metallionen enthaltenden Lösungen oder Sole oder Suspensionen vorzugsweise Aluminium- oder Zink- oder Zinn- oder Blei- oder Gallium- oder Zirkonium- oder Nickel- oder Kupfer- oder Cobalt-oder Chromionen oder Gemische dieser Ionen enthalten.

4. Verfahren nach Anspruch 1 und 2,
**dadurch gekennzeichnet, daß** die Sole vorzugsweise Metallhydroxidsole sind, die vorzugsweise durch die langsame, unter Rühren erfolgende Zugabe einer Metallsalzlösung zu einer, im Überschuß vorliegenden, und ein Peptisationsmittel enthaltenden Alkalilauge hergestellt werden und daß als Peptisationsmittel vorzugsweise mehrwertige Alkohole und/oder mehrwertige Carbonsäuren oder Gemische aus diesen eingesetzt werden.

5. Verfahren nach Anspruch 1 und 2,
**dadurch gekennzeichnet, daß** zur Synthese von Carbonaten und/oder zur Abscheidung von Carbonatschichten führende Lösungen oder Suspensionen oder Sole vorzugsweise Barium- und/oder Calcium- und/oder Magnesium- und/oder Strontiumionen enthalten.

6. Verfahren nach einem der Ansprüche 1, 2 und 5,
**dadurch gekennzeichnet, daß** die zur Herstellung von feinkristallinem Calciumcarbonat und/oder Calciumsilikat und/oder zur Abscheidung von CaCO₃ und/oder Calciumsilikatschichten eingesetzten alkalischen, Calciumionen enthaltende Lösungen durch den Zusatz von löslichkeitserhöhenden und/oder fällungsverzögerend wirkenden Komponenten Ca(OH)₂-Konzentrationen aufweisen, die über der normalen Löslichkeit von Ca(OH)₂ liegen.

7. Verfahren nach einem der Ansprüche 1, 2, 5 und 6,
**dadurch gekennzeichnet, daß** die Ca(OH)₂-Lösungen mit Konzentrationen oberhalb der normalen Löslichkeit von Ca(OH)₂ durch ein Auflösen von Ca(OH)₂ in Lösungen, die die löslichkeitserhöhenden und/oder fällungsverzögernd wirkenden Komponenten enthalten, und/oder durch ein Vermischen von Lösungen leicht löslicher Calciumsalze mit Alkalilaugen in Gegenwart der löslichkeitserhöhenden Komponente hergestellt werden.

8. Verfahren nach einem der Ansprüche 1, 2, 5, 6 und 7,
**dadurch gekennzeichnet, daß** als löslichkeitserhöhende und/oder fällungsverzögernde Komponenten vorzugsweise Kohlenhydrate wie Saccharose, Glukose, Fruktose oder Glukonate und/oder Amine und/oder Ammoniumsalze wie NH₄Cl oder HCO₂NH₄ eingesetzt werden.

9. Verfahren nach Anspruch 1 und 2,
**dadurch gekennzeichnet, daß** zur Herstellung von Magnesiumsilikaten alkalische, Mg²⁺-Ionen enthaltende Lösungen oder Sole eingesetzt werden, die durch Zusatz eines geeigneten Puffersystem oder in Gegenwart eines Peptisationsmittels hergestellt wurden und daß als Puffersystem vorzugsweise NH₄Cl/NH₃-Lösungen und als Peptisationsmittel vorzugsweise Glycerin eingesetzt werden.

10. Verfahren nach Anspruch 1 und 2,
**dadurch gekennzeichnet, daß** sowohl mit Wasser mischbare als auch nicht oder nur teilweise mischbare Ester eingesetzt werden.

11. Verfahren nach Anspruch 1,2 und 10,
**dadurch gekennzeichnet, daß** bei Einsatz von Estern, die nicht oder nur teilweise mit Wasser mischbar sind, eine homogene flüssige Phase durch den Zusatz einer dritten, lösungsvermittelnden Komponente erzeugt wird.

12. Verfahren nach einem der Ansprüche 1, 2, 10 und 11,
**dadurch gekennzeichnet, daß** die dritte, lösungsvermittelnde Komponente vorzugsweise einen Alkohol darstellt der sowohl mit dem Ester als auch der wäßrigen Lösung mischbar ist und die Konzentrationsverhältnisse der Komponenten so gewählt werden, daß eine homogene flüssige Phase entsteht.

13. Verfahren nach Anspruch 1 und 2,
**dadurch gekennzeichnet, daß** die alkalischen Metallionen enthaltenden Lösungen durch die Zugabe einer neutralen oder sauren Lösung eines Metallsalzes zu einer im Überschuß vorliegenden Lauge so hergestellt werden, daß in der Lösung Metallhydroxokomplexe gebildet werden.

14. Verfahren nach Anspruch 1 und 2,
**dadurch gekennzeichnet, daß** die alkalischen Metallionen enthaltenden Lösungen durch ein Auflösen von Metallhydroxiden oder von Metallen in Alkalilaugen hergestellt werden.

15. Verfahren nach einem der Ansprüche 1, 2, 3 und 10 bis 12,
**dadurch gekennzeichnet, daß** die zur Hydroxid- und/oder Oxidhydroxidbildung führenden Ester vorzugsweise Ester der Ameisensäure und/oder der Essigsäure und/oder der Propansäure sind.

16. Verfahren nach einem der Ansprüche 1, 2 und 5 bis 8,
**dadurch gekennzeichnet, daß** als Kohlensäureester vorzugsweise Ethylencarbonat, Propylencarbonat, Diethylcarbonat, Dimethylcarbonat oder Mischungen aus diesen eingesetzt werden.

17. Verfahren nach Anspruch 1 und 2,
**dadurch gekennzeichnet, daß** zur Herstellung von Calciumsilikaten als Kieselsäureester vorzugsweise Tetraethylorthosilicat eingesetzt wird.

18. Verfahren nach einem der Ansprüche 1 bis 8 und 13 bis 16,
**dadurch gekennzeichnet, daß** die Esterkonzentration so bemessen wird, daß in den Lösungen anwesende Hydroxidionen umgesetzt werden und es gleichzeitig zu einer Zerstörung von vorliegenden Metallhydroxokomplexen kommt.

19. Verfahren nach Anspruch 1,2, 16 und 17,
**dadurch gekennzeichnet, daß** die Verseifung der Kohlensäureester und/oder der Kieselsäureester vorzugsweise bei einem konstantem pH-Wert durchgeführt wird und dieser durch den Zusatz von Puffergemischen und/oder durch eine kontinuierliche Zudosierung einer Lauge aufrechterhalten wird und dass als Puffergemische vorzugsweise Glykokollpuffer nach Sörensen oder Borsäure/Boraxpuffer nach Palitzsch oder NH₃/NH₄Cl-Puffer, oder Natriumboratpuffer nach Sörensen und Clark oder Borsäurepuffer nach Clark und Lubs eingesetzt werden.

20. Verfahren nach Anspruch 1 und 2,
**dadurch gekennzeichnet, daß** die Zusammensetzung der Fällprodukte und/oder der gebildeten Schichten, deren Phasenbestand und deren physikalisch-chemische Eigenschaften durch die Konzentration des Esters und/oder die Metallionenkonzentration und/oder die Temperatur und/oder die Rührbedingungen und/oder die Zusammensetzung und/oder die Konzentration der lösungsvermittelnden Komponente gesteuert wird.

## Claims

1. Method for producing finely crystalline solids and/or for depositing layers of poorly soluble compounds out of the liquid phase,
**characterized in that** metal ions containing solutions or suspensions or soles are reacted in the alkaline range with one or more esters.

2. Method according to claim 1
**characterized in that**
for producing hydroxides and/or oxide hydroxides and/or for depositing layers of these compounds, esters are employed, wherein during the saponification thereof the resulting acid does not form a precipitation product with the metal ions,
for producing carbonates and/or basic carbonates and/or for depositing carbonatic layers, esters of the carbonic acid are employed,
for producing calcium and/or magnesium silicates and/or for depositing layers of these compounds, esters of the silicic acid are saponified.

3. Method according to claims I and 2 **characterized in that** the alkaline metal ions containing solutions or soles or suspensions employed for synthesizing finely crystalline hydroxides and/or oxide hydroxides and/or basic carbonates and/or for depositing layers of these compounds preferably contain aluminum or zinc or tin or lead or gallium or zirconium or nickel or copper or cobalt or chromium ions or mixtures of these ions.

4. Method according to claims 1 and 2 **characterized in that** the soles are preferably metal hydroxide soles which are preferably produced by the slow addition under stirring of a metal salt solution to a lye present in excess and containing a peptizing agent and that as peptizing agent preferably polyhydric alcohols and/or polyhydric carboxylic acids or mixtures thereof are employed.

5. Method according to claims 1 and 2 **characterized in that** the solutions or suspensions or soles resulting in synthesis of carbonate and/or deposition of carbonate layers preferably contain barium and/or calcium and/or magnesium und/or strontium ions.

6. Method according to any one of claims 1, 2 and 5 **characterized in that** the alkaline calcium ions containing solutions employed for producing finely crystalline calcium carbonate and/or calcium silicate and/or for depositing CaCO₃ and/or calcium silicate layers exhibit concentrations of Ca(OH)₂ above the normal solubility of Ca(OH)₂ due to addition of components increasing the solubility and/or inhibiting the precipitation.

7. Method according to any one of claims 1, 2, 5 and 6 **characterized in that** the Ca(OH)₂ solutions with concentrations above the normal solubility of Ca(OH)₂ are produced by means of dissolving Ca(OH)₂ in solutions containing components increasing the solubility and/or inhibiting the precipitation, and/or by means of mixing solutions of readily soluble calcium salts with lyes in the presence of the component increasing the solubility.

8. Method according to any one of claims 1, 2, 5, 6 and 7 **characterized in that** as components increasing the solubility and/or inhibiting the precipitation preferably carbohydrates such as sucrose, glucose, fructose or gluconates and/or amines and/or ammonium salts such as NH₄Cl or HCO₂NH₄ are employed.

9. Method according to claims 1 and 2 **characterized in that** for producing magnesium silicates alkaline Mg²⁺ ions containing solutions or soles are employed which are produced by means of adding a suitable buffering system or in the presence of a peptizing agent, and that as a buffering system preferably NH₄Cl/NH₃ solutions and as a peptizing agent preferably glycerin are employed.

10. Method according to claims I and 2 **characterized in that** both water-miscible and not or only partially miscible esters are employed.

11. Method according to claims 1, 2 and 10 **characterized in that** with the employment of esters which are not or only partially water-miscible a homogenous liquid phase is generated by adding a third solutizing component.

12. Method according to any one of claims 1, 2, 10 and 11 **characterized in that** the third solutizing component preferably represents an alcohol that is both miscible with the ester and the aqueous solution and the concentration ratios of the components are selected such that a homogenous liquid phase is formed.

13. Method according to claims I and 2 **characterized in that** the alkaline metal ions containing solutions are produced by adding a neutral or acidic solution of metal salts to a lye present in excess such that metal hydroxo complexes are formed in the solution.

14. Method according to claims 1 and 2 **characterized in that** the alkaline metal ions containing solutions are produced by dissolving metal hydroxides or metals in lyes.

15. Method according to any one of claims 1, 2, 3 and 10 to 12 **characterized in that** the esters resulting in the formation of hydroxide and/or oxide hydroxide are preferably esters of the formic acid and/or of the acetic acid and/or of the propionic acid.

16. Method according to any one of claims 1, 2 and 5 to 8 **characterized in that** as carbonic acid esters preferably ethylene carbonate, propylene carbonate, diethyl carbonate, dimethyl carbonate or mixtures thereof are employed.

17. Method according to claims 1 and 2 **characterized in that** for producing calcium silicates tetraethylorthosilicate is preferably employed as the silicic acid ester.

18. Method according to any one of claims 1 to 8 and 13 to 16 **characterized in that** the ester concentration is adjusted such that hydroxide ions present in the solutions are reacted, and simultaneously degradation of existing metal hydroxo complexes occurs.

19. Method according to claims 1, 2, 16 and 17 **characterized in that** the saponification of the carbonic acid esters and/or of the silicic acid esters is preferably carried out at a constant pH value and it is maintained by adding buffering mixtures and/or by continuously metering a liquor and that as buffering mixtures preferably Sörensen glycocoll buffers or Palitzsch boric acid/borax buffers or NH₃/NH₄Cl buffers or Sörensen and Clark sodium borate buffers or Clark and Lubs boric acid buffers are employed.

20. Method according to claims 1 and 2 **characterized in that** the composition of the precipitation products and/or of the formed layers, the phase existence and physical-chemical properties thereof are controlled by the concentration of the ester and/or the concentration of metal ions and/or the temperature and/or the stirring conditions and/or the composition and/or the concentration of the solutizing component.

## Revendications

1. Procédé de production de matières solides en fins cristaux et/ou pour la séparation de couches de liaisons difficilement soluble à partir de la phase liquide,
**caractérisé en ce que** des solutions ou des suspensions ou des sols contenant des ions métalliques sont transformées dans la zone alcaline avec un ou plusieurs esters.

2. Procédé selon la revendication 1
**caractérisé en ce que**
pour la production d'hydroxydes et/ou d'hydroxydes d'oxyde et/ou pour la séparation de couches de ces liaisons, il est utilisé des esters lors de la saponisation desquels l'acide généré ne forme pas de produit de précipitation avec les ions métalliques,
pour la production de carbonates et/ou de carbonates basiques et/ou pour la séparation de couches carbonatiques, il est utilisé des esters de dioxyde de carbone,
pour la production de silicates de calcium et/ou de magnésium et/ou pour la séparation de couches de ces liaisons, il est utilisé des esters de l'acide silique.

3. Procédé selon les revendications 1 et 2
**caractérisé en ce que** les solutions ou les sols ou les suspensions contenant des ions métalliques alcalins utilisés pour la synthèse d'hydroxydes et/ou hydroxydes d'oxyde en fins cristaux et/ou de carbonates basiques et/ou pour la séparation de couches de ces liaisons contiennent de préférence des ions d'aluminium ou de zinc ou d'étain ou de plomb ou de gallium ou de zirconium ou de nickel ou de cuivre ou de cobalt ou de chrome ou des mélanges de ces ions.

4. Procédé selon les revendications 1 et 2
**caractérisé en ce que** les sols sont de préférence des sols d'hydroxydes métalliques qui sont produits de préférence par l'adjonction lente, s'effectuant en mélangeant, d'une solution de sels métalliques pour devenir une lessive alcaline en excédent et contenant un agent de peptisation et qu'en tant qu'agent de peptisation, il est utilisé de préférence des alcools polyvalents et/ou des acides carboxilytes polyvalents ou des mélanges de ceux-ci.

5. Procédé selon les revendications 1 et 2
**caractérisé en ce que** les solutions ou les suspensions ou les sols conduisant à la synthèse des carbonates et/ou à la séparation de couches de carbonate contiennent de préférence des ions de baryum et/ou de calcium et/ou de magnésium et/ou de strontium.

6. Procédé selon les revendications 1, 2 et 5
**caractérisé en ce que** les solutions alcalines contenant des ions de calcium utilisées pour la production de carbonate de calcium en cristaux fins et/ou de silicate de calcium et/ou pour la séparation de CaCO₃ et/ou de couches de silicates de calcium présentent des concentrations de Ca(OH)₂, se situant au-dessus de la solubilité normale de Ca(OH)₂, dus à l'adjonction de composants ayant une action augmentant la solubilité et/ou ralentissant la précipitation.

7. Procédé selon les revendications 1, 2, 5 et 6
**caractérisé en ce que** les solutions Ca(OH)₂ sont produites avec des concentrations se situant au-dessus de la solubilité normale de Ca(OH)₂ par une dissolution de Ca(OH)₂ en solutions contenant des composants ayant une action augmentant la solubilité et/ou ralentissant la précipitation et/ou par un mélange de solutions de sels de calcium légèrement solubles avec lessives alcalines en présence des composants augmentant la solubilité.

8. Procédé selon les revendications 1, 2, 5, 6 et 7
**caractérisé en ce qu'**en tant que composants augmentant la solubilité et/ou ralentissant la précipitation, il est utilisé de préférence les hydrates de carbone telles que saccharose, glucose, fructose ou gluconate et/ou amines et/ou sels d'aluminium tels que NH₄Cl ou HCO₂NH₄.

9. Procédé selon les revendications 1 et 2
**caractérisé en ce que** les solutions ou les sols alcalins contenant des ions Mg²⁺ pour production de silicates de magnésium qui ont été produits par adjonction d'un système tampon adapté ou en présence d'un agent de peptisation et qu'en tant de système tampon il est utilisé de préférence des solutions NH₄Cl/NH₃ et en tant qu'agent de peptisation de préférence de la glycérine.

10. Procédé selon les revendications 1 et 2
**caractérisé en ce qu'**il est utilisé tant des esters pouvant être mélangés à l'eau que des esters ne pouvant être mélangés que partiellement ou pas du tout à l'eau.

11. Procédé selon les revendications 1, 2 et 10
**caractérisé en ce que** lors de l'utilisation d'esters ne pouvant se mélanger ou ne se mélanger que partiellement à l'eau, on obtient une phase liquide homogène par adjonction d'un troisième composant solubiliseur.

12. Procédé selon les revendications 1, 2, 10 et 11
**caractérisé en ce que** le troisième composant solubiliseur représente de préférence un alcool pouvant être mélangé tant à l'ester qu'à la solution aqueuse et que les rapports de concentration de composants sont choisis de façon à générer une phase liquide homogène.

13. Procédé selon les revendications 1 et 2
**caractérisé en ce que** les solutions contenant des ions métalliques alcalins sont produites par adjonction d'une solution neutre ou acide d'un sel métallique pour devenir une lessive en excédent afin que dans la solution, il se forme des complexes hydroxydes métalliques.

14. Procédé selon les revendications 1 et 2
**caractérisé en ce que** les solutions contenant des ions métalliques alcalins sont produites par dissolution d'hydroxydes métalliques ou de métaux dans les lessives alcalines.

15. Procédé selon les revendications 1, 2, 3 et 10 à 12
**caractérisé en ce que** les esters générant la formation d'hydroxyde et/ou d'hydroxyde d'oxyde sont de préférence des esters de l'acide formique et/ou de l'acide acétique et/ou de l'acide propionique.

16. Procédé selon les revendications 1, 2 et 5 à 8
**caractérisé en ce qu'**on tant qu'esters de dioxyde de carbone il est utilisé de préférence du carbonate d'éthylène, du carbonate de propylène, du diéthylcarbonate, du diméthylcarbonate ou un mélange de ces éléments.

17. Procédé selon les revendications 1 et 2
**caractérisé en ce qu'**en tant qu'esters d'acide salique, il est utilisé de préférence un orthosilicate de tétraéthyl pour la production de silicates de calcium.

18. Procédé selon les revendications 1 à 8 et 13 à 16
**caractérisé en ce que** la concentration d'esters est dimensionnée de façon que les ions d'hydroxyde se trouvant dans les solutions se transforment et qu'on obtienne en même temps une destruction des complexes hydroxydes métalliques présents.

19. Procédé selon les revendications 1,2, 16 et 17
**caractérisé en ce que** la saponisation des esters de dioxyde de carbone et/ou d'esters d'acide silique est exécutée de préférence à une valeur pH constante et que cette valeur est maitenue par l'adjonction de mélanges tampon et/ou par une addition dosée permanente d'une lessive et qu'en tant que mélanges tampon, il est utilisé de préférence un tampon glycocolle selon Sörensen ou un acide borique/tampon au borax selon Palitzsch ou un tampon NH₃/NH₄Cl ou un tampon au borate de sodium selon Sörensen et Clark ou un tampon à l'acide borique selon Clark et Lubs.

20. Procédé selon les revendications 1 et 2
**caractérisé en ce que** la composition des produits de précipitation et/ou des couches formées, de leur état de phase et de leurs propriétés physico-chimiques est déterminée par la concentration de l'ester et/ou la concentration d'ions métalliques et/ou la température et/ou les conditions de mélange et/ou la composition et/ou la concentration de composants solubiliseurs.
